# EUROPÄISCHE PATENTSCHRIFT

(11) **EP 0 730 535 B1**
(45) Veröffentlichungstag und Bekanntmachung des Hinweises auf die Patenterteilung: **10.03.1999**
(21) Anmeldenummer: 95901398.8
(22) Anmeldetag: 19.11.1994
(51) Int. Cl.: B60N 2/48, G09F 21/04

(54) **SITZ FÜR EIN VERKEHRSMITTEL**
VEHICLE SEAT
SIEGE POUR MOYEN DE TRANSPORT

(30) Priorität: 25.11.1993 DE 4340189
(43) Veröffentlichungstag der Anmeldung: 11.09.1996
(73) Patentinhaber: FIRMA IMMANUEL HAFFNER, 70184 Stuttgart (DE)
(72) Erfinder: HAFFNER, Peter, D-70184 Stuttgart (DE)
(74) Vertreter: Beck, Jürgen, Dr. Dipl.-Phys.
(86) Internationale Anmeldenummer: EP9403831
(87) Internationale Veröffentlichungsnummer: WO9514588

(56) Entgegenhaltungen:
- EP-A- 0 277 014
- EP-A- 0 492 429
- EP-A- 0 563 867
- FR-A- 2 626 703
- FR-A- 2 650 908
- FR-A- 2 677 791
- US-A- 5 010 668
- US-A- 5 123 704

## Beschreibung

Die Erfindung betrifft einen Sitz für ein Verkehrsmittel, insbesondere für ein öffentliches Verkehrsmittel, mit einem Sitzkissen, mit einer Rückenlehne, mit einem Untergestell sowie mit einer rückseitigen Verkleidung der Rückenlehne, wobei die rückseitige Verkleidung im Sichtbereich eines sich hinter dieser befindlichen Passagiers mit einem Informationsträger versehen ist, welcher eine Aufnahme mit einer durchsichtigen Abdeckung für eine Sichtfläche eines Informationsträgereinsatzes und einen Informationsträgereinsatz umfaßt und welcher eine an der Verkleidung unverrückbar fixierte und optisch erkennbare Information präsentiert.

Ein derartiger Sitz ist aus der FR-A-2 677 791 bekannt, wobei diese eine plattenförmige Abdeckung für die Rückenlehne mit einem Informationsträgereinsatz offenbart.

Die EP-A-0 492 429 offenbart eine als Überzug für eine Kopfstütze ausgebildete Haltevorrichtung für einen Werbeträger.

Die EP-A-0 563 867 offenbart eine Halterung zum auswechselbaren Halten von Werbemitteln, beispielsweise an der Kopfstütze eines Fahrzeugsitzes.

Die US-A-5 010 668 offenbart eine nicht aus flexiblem Material bestehende Hülle für einen Werbeträger.

Der Erfindung liegt daher die Aufgabe zugrunde, einen Sitz mit einem vorteilhafter ausgebildeten und angeordneten Informationsträger zu schaffen.

Diese Aufgabe wird bei einem Sitz für Verkehrsmittel, insbesondere öffentliche Verkehrsmittel, der eingangs beschriebenen Art erfindungsgemäß durch die Merkmale der Ansprüche 1, 3 und 14 gelöst. Vorteilhafte Weiterbildungen derselben sind Gegenstand der Unteransprüche 2 und 4 bis 13.

Der Vorteil der erfindungsgemäßen Lösung ist darin zu sehen, daß durch die Anördnung des Informationsträgers an der Verkleidung, welche bei einigen Ausführungsbeispielen eine Verkleidungsplatte und einen Klapptisch umfaßt, der sich hinter dieser befindliche, insbesondere sitzende Passagier die Möglichkeit hat, diese Information ausführlich zu studieren, so daß sich die Information, insbesondere die Werbeinformation, bei dem Passagier nachhaltig einprägt.

Die hinsichtlich der Befestigung des erfindungsgemäßen Informationsträgers an der Verkleidung erfindungsgemäße Lösung sieht vor, daß die gesamte Hülle aus flexiblem Folienmaterial hergestellt ist. Vorzugsweise handelt es sich hierbei um eine Tasche oder Hülle aus Folienmaterial, vorzugsweise durchsichtiger Folie.

Besonders gegen unbefugte Entfernung ist der Informationsträgereinsatz dann geschützt, wenn er in der Aufnahme unentnehmbar fixiert ist. Im einfachsten Fall erfolgt dies durch Einschließen, insbesondere Einschweißen, desselben in die Aufnahme.

Eine alternative Lösung sieht vor, daß der Informationsträgereinsatz auswechselbar ist, entweder durch eine entsprechend ausgebildete Aufnahme oder durch eine Fixierung des Informationsträgers an der Verkleidung dergestalt, daß dieser als Ganzes auswechselbar ist. Dies hat den Vorteil, daß sich die Information in einfacher Weise ändern läßt.

Für den Fall eines auswechselbaren Informationsträgereinsatzes hat es sich als zweckmäßig erwiesen, wenn die Aufnahme eine Einführöffnung für den Informationsträgereinsatz umfaßt. Diese Einführöffnung kann eine Einstecköffnung sein, sie kann jedoch aber auch durch vollständige oder teilweise Entfernung der Abdeckung zugänglich sein.

Im einfachsten Fall ist vorgesehen, daß der Informationsträgereinsatz in eine schlitzartige Einstecköffnung der Aufnahme einsteckbar ist.

Insbesondere vorteilhaft ist die erfindungsgemäße Lösung daher für Werbeinformation, da sich diese der Passagier für einen erheblichen Zeitraum während der Fahrt präsentiert

Eine weitere vorteilhafte Variante sieht vor, daß der Informationsträger in einem ersten Teilbereich Werbeinformation und in einem zweiten Teilbereich Sachinformation, beispielsweise Information über das Verkehrsmittel, trägt.

Bei dem Informationsträgereinsatz handelt es sich vorzugsweise um einen kartenähnlich flachen Informationsträgereinsatz, welcher im einfachsten Fall aus einem Kartonmaterial oder Plastikmaterial hergestellt ist.

Der Informationsträgereinsatz kann in vielfältiger Weise mit optisch sichtbarer Information versehen sein. Vorzugsweise ist er mit der optischen Information bedruckt.

Die Aufnahme selbst kann in unterschiedlichster Art und Weise ausgebildet sein. Als besonders vorteilhaft hat es sich erwiesen, wenn die Aufnahme als den Informationsträgereinsatz umschließende Tasche oder Hülle ausgebildet ist.

Alternativ dazu ist vorgesehen, daß die Aufnahme eine den Informationsträgereinsatz aufnehmende Vertiefung in der Verkleidung und eine Abdeckung umfaßt, wobei die Vertiefung insbesondere durch eine abnehmbare Abdeckung verschließbar ist.

Bei einem weiteren Ausführungsbeispiel ist vorgesehen, daß die Aufnahme durch den Informationsträgereinsatz übergreifende Abdeckung umfaßt, welche vorzugsweise abnehmbar mit der Verkleidung verbindbar ist.

Hinsichtlich der Verbindung der Aufnahme mit der Verkleidung wurden im Zusammenhang mit den bisherigen Ausführungsbeispielen keine näheren Angaben gemacht. So sieht eine der erfindungsgemäßen Lösungen vor, daß die Aufnahme über eine Klebeschicht mit der Verkleidung verbunden ist.

Bei der Verwendung einer Klebeschicht zur Verbindung zwischen der Aufnahme und der Verkleidung ist vorzugsweise vorgesehen, daß die Klebeschicht durch ein doppelseitiges Klebeband gebildet ist.

Ein weiteres vorteilhaftes Ausführungsbeispiel sieht vor, daß die Aufnahme formschlüssig mit der Verkleidung verbunden ist. Dies ist insbesondere in dem Fall vorteilhaft, in dem die Aufnahme eine in die Verkleidung eingelassene Vertiefung und eine Abdeckung zum Verschließen der Vertiefung umfaßt. In diesem Fall ist die Abdeckung formschlüssig an der Verkleidung fixierbar.

Im Zusammenhang mit der bisherigen Erläuterung der einzelnen Ausführungsbeispiele wurde nicht auf die konkrete Anordnung des Informationsträgers an der Verkleidung im Detail abgestellt.

So sieht ein vorteilhaftes Ausführungsbeispeil vor, daß der Informationsträger auf einer frei sichtbaren Oberfläche der Verkleidung angeordnet ist.

In dem Fall, in dem die Verkleidung mit einem Klapptisch versehen ist, sieht eine weitere vorteilhafte Lösung der erfindungsgemäßen Aufgabe vor, daß der Informationsträger in einem durch einen von der Verkleidung umfaßten Klapptisch verdeckbaren Bereich der Verkleidung angeordnet ist.

Alternativ dazu ist vorgesehen, daß der Informationsträger auf einer Unterseite eines von der Verkleidung umfaßten Klapptisches angeordnet ist.

Der Vorteil in den beiden vorstehend genannten Fällen besteht darin, daß entweder der Passagier die Möglichkeit hat, den Inhalt des Informationsträgers bei heruntergeklapptem oder hochgeklapptem Klapptisch im Detail zu studieren, durch die entsprechende Stellung des Klapptisches diesen aber auch verdecken kann.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine schematische perspektivische Darstellung eines erfindungsgemäßen Sitzes bei einem ersten Ausführungsbeispiel der erfindungsgemäßen Lösung;
- Fig. 2: eine Darstellung des Sitzes ähnlich Fig. 1 bei einem zweiten Ausführungsbeispiel mit heruntergeklapptem Klapptisch;
- Fig. 3: eine Darstellung ähnlich Fig. 2 des zweiten Ausführungsbeispiels mit hochgeklapptem Klapptisch;
- Fig. 4: eine Darstellung ähnlich Fig. 1 eines dritten Ausführungsbeispiels;
- Fig. 5: eine Darstellung ähnlich Fig. 1 eines vierten Ausführungsbeispiels;
- Fig. 6: eine Darstellung ähnlich Fig. 1 eines fünften Ausführungsbeispiels;
- Fig. 7: einen Schnitt längs Linie 5-5 in Fig. 1 durch eines der Ausführungsbeispiele des Sitzes im Bereich des Informationsträgers mit einem ersten Ausführungsbeispiel eines der erfindungsgemäßen Informationsträger;
- Fig. 8: eine perspektivische Darstellung des ersten Ausführungsbeispiels des erfindungsgemäßen Informationsträgers mit teilweise herausgezogenem Informationsträgereinsatz;
- Fig. 9: eine Schnittdarstellung ähnlich Fig. 7 eines zweiten Ausführungsbeispiels eines erfindungsgemäßen Informationsträgers und
- Fig. 10: eine Schnittdarstellung ähnlich Fig. 7 eines dritten Ausführungsbeispiels eines erfindungsgemäßen Informationsträgers.

Ein erstes Ausführungsbeispiel eines als Ganzes mit 10 bezeichneten erfindungsgemäßen Sitzes, insbesondere eines Sitzes für ein Verkehrsflugzeug, umfaßt ein Sitzkissen 12, welches eine Sitzfläche 14 trägt, sowie eine Rückenlehne 16 mit einer Lehnfläche 18.

Das Sitzkissen 12 ruht dabei auf einem Untergestell 20, mit welchem sich der gesamte Sitz 10 auf einer Bodenfläche 22 abstützt.

Die Rückenlehne 16 ist auf der der Lehnfläche 18 gegenüberliegenden Seite mit einer rückseitigen Verkleidung 24 versehen, welche im Fall des ersten Ausführungsbeispiels eine Verkleidungsplatte 26 mit einer einer hinter dem Sitz 10 befindlichen Person zugewandten Oberfläche 28 aufweist.

Die Verkleidungsplatte 26 trägt dabei vorzugsweise mittig in ihrer oberen, dem Untergestell 20 abgewandten Hälfte einen Informationsträger 30, welcher ebenfalls von einer sich hinter dem Sitz 10 befindenden insbesondere sitzenden Person einsehbar ist. Dieser Informationsträger 30 wird nachfolgend in Form einiger Ausführungsbeispiele im einzelnen beschrieben.

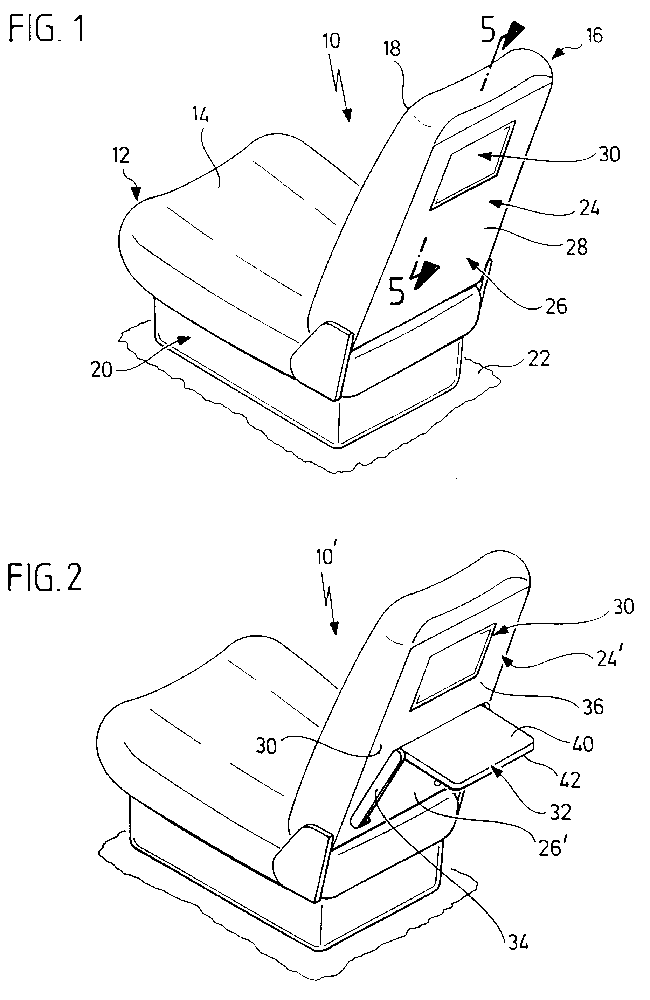

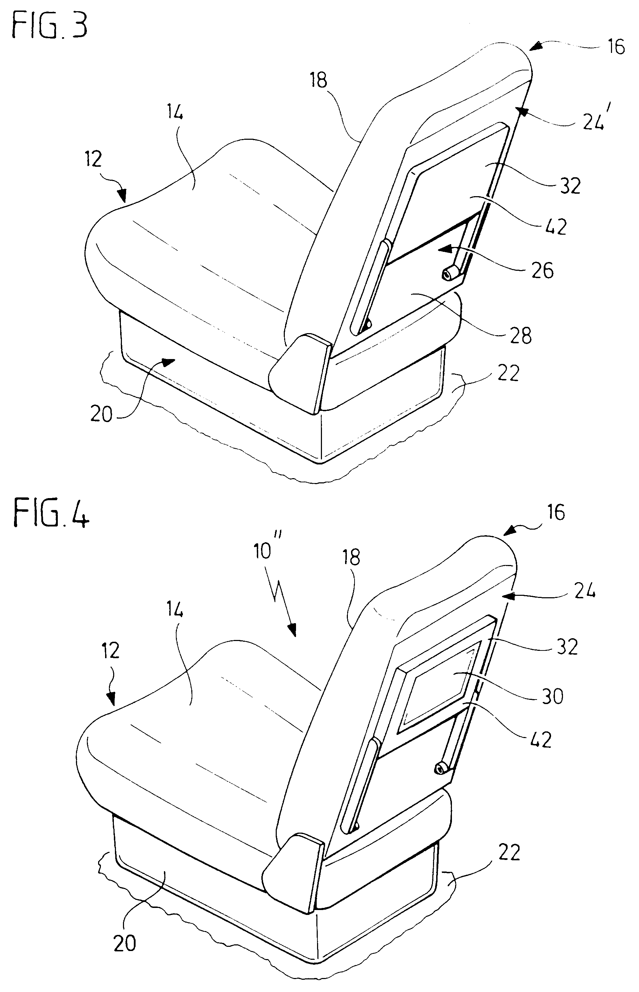

Bei einem zweiten, als Ganzes mit 10' bezeichneten Ausführungsbeispiel eines erfindungsgemäßen Sitzes umfaßt die Verkleidung 24' eine Verkleidungsplatte 26' mit einem Klapptisch 32, welcher über Streben 34 gelenkig mit der Verkleidungsplatte 26' verbunden ist, wobei der Klapptisch 32 zwischen einer heruntergeklappten Stellung, dargestellt in Fig. 2 und einer hochgeklappten Stellung, dargestellt in Fig. 3 klappbar ist. Zur Aufnahme des Klapptisches 32 in seiner hochgeklappten Stellung ist die Verkleidungsplatte 26' mit einem zurückgesetzten Bereich 36 versehen, in welcher der Klapptisch 32 in seiner in Fig. 3 dargestellten hochgeklappten Stellung liegt.

Der zurückgesetzte Bereich 36 weist ihrerseits eine Bereichsoberfläche 38 auf, welche in der heruntergeklappten Stellung des Klapptischs 32 einer den Klapptisch 32 benutzenden Person zugewandt ist und in der hochgeklappten Stellung des Klapptischs 32 einer Oberseite 40 des Klapptisches, so daß in dieser Stellung die Unterseite 42 des Klapptisches 32 der hinter dem Sitz 10' sich befindenden Person zugewandt ist.

Bei dem zweiten Ausführungsbeispiel 10' des erfindungsgemäßen Sitzes ist der Informationsträger 30 auf der Bereichsoberfläche 38 und zwar ebenfalls vorteilhafterweise in einer oberen Hälfte derselben angeordnet.

Bezüglich weiterer Merkmale wird auf das erste Ausführungsbeispiel vollinhaltlich Bezug genommen und für die identischen Elemente sind auch dieselben Bezugszeichen wie für das erste Ausführungsbeispiel verwendet.

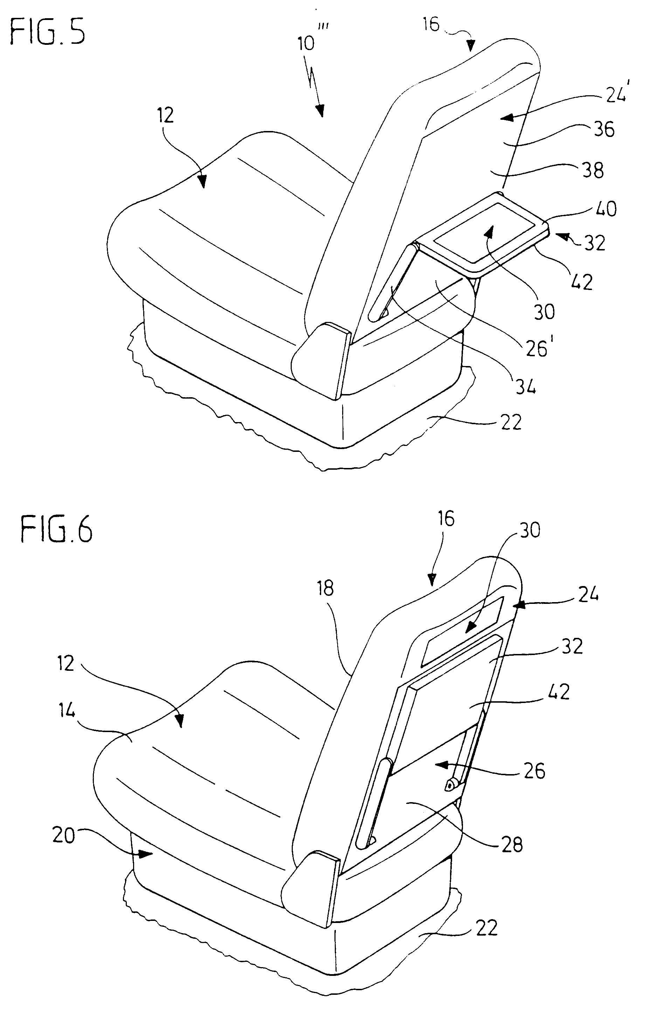

Bei einem dritten Ausführungsbeispiel eines erfindungsgemäßen Sitzes 10'', dargestellt in Fig. 4 ist der Informationsträger 30 nicht in der Vertiefung 36 angeordnet, sondern auf der Unterseite 42 des Klapptisches 32, so daß der Informationsträger im hochgeklappten Zustand des Klapptisches 32 sichtbar ist.

Hinsichtlich der weiteren Merkmale wird auf die Ausführungen zum ersten und zweiten Ausführungsbeispiel vollinhaltlich Bezug genommen, wobei dieselben Elemente dieselben Bezugszeichen tragen.

Bei einem vierten Ausführungsbeispiel eines erfindungsgemäßen Sitzes 10''', dargestellt in Fig. 6, ist der Informationsträger 30 im Gegensatz zum dritten Ausführungsbeispiel nicht auf der Unterseite 42 sondern auf der Oberseite 40 des Klapptisches angeordnet und daher im heruntergeklappten Zustand desselben sichtbar.

Bei allen übrigen Merkmalen des vierten Ausführungsbeispiels finden dieselben Bezugszeichen wie bei den vorangegangenen Ausführungsbeispielen Verwendung, so daß auch auf die Ausführungen hierzu vollinhaltlich Bezug genommen werden kann.

Bei einem fünften Ausführungsbeispiel eines erfindungsgemäßen Sitzes 10''' ist der Informationsträger 30 an der Verkleidung 24' und zwar oberhalb des Klapptisches 32 in seiner hochgeklappten Stellung angeordnet, so daß der Informationsträger 30 in allen Stellungen des Klapptisches 32 sichtbar ist.

Vorzugsweise ist der Informationsträger im Bereich unmittelbar über dem Klapptisch 32 in seiner hochgeklappten Stellung angeordnet.

Zur Bezeichnung der übrigen Merkmale wurden dieselben Bezugszeichen wie bei den vorausgegangenen Ausführungsbeispielen verwendet, so daß auf die entsprechenden Passagen in der Beschreibung verwiesen werden kann.

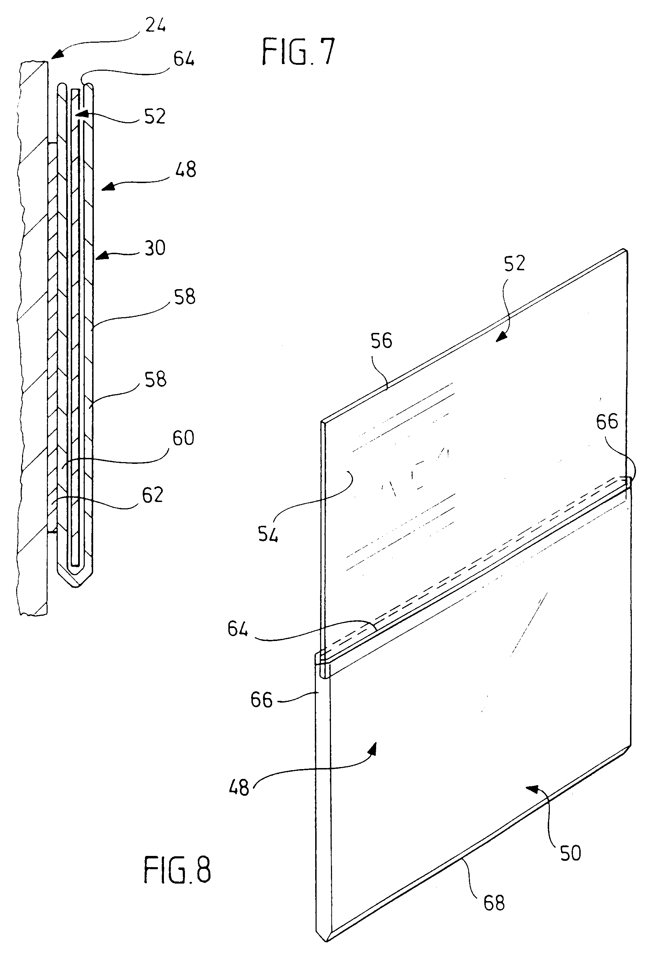

Ein erstes Ausführungsbeispiel des als Ganzes mit 30 bezeichneten Informationsträgers umfaßt, wie in Fig. 7 und 8 dargestellt, eine als Hülle 50 ausgebildete Aufnahme 48 für einen als Ganzes mit 52 bezeichneten Informationsträgereinsatz, welcher beispielsweise auf einer Sichtfläche 54 mit aufgedruckten Werbeinformationen oder Informationen anderer Art versehen ist und als Einsteckkarte 56 aus Karton für die Hülle 50 ausgebildet ist. Die Hülle 50 umfaßt ihrerseits eine transparente der Verkleidung 24 abgewandte Hüllenwand 58 und eine Trägerwand 60, welche beispielsweise über einen doppelseitig klebenden Klebestreifen 62 mit der Verkleidung 24, das heißt der Oberfläche 28 oder der Vertiefungsoberfläche 38 oder der Unterseite 42 des Klapptisches 32 durch Klebung verbunden ist.

Zum Auswechseln der Einsteckkarte 56 ist die Hülle 50 noch mit einer Einstecköffnung 64 versehen, deren Ränder durch Ränder der Trägerwand 60 und Ränder der Hüllenwand 58 gebildet sind, wobei diese beispielsweise beiderseits der Einstecköffnung 64 durch Schweißnähte 66 und ebenfalls zusätzlich noch durch eine Bodenschweißnaht 68, miteinander verbunden sind, welche im Abstand parallel zur Einstecköffnung 64 verläuft und die Einsteckkarte 56 gegen ein Herausfallen nach unten sichert.

Alternativ dazu ist es auch zweckmäßig, wenn die Einsteckkarte 56 durch ein allseitiges Verschweißen der Ränder der Trägerwand 60 und der Hüllenwand 58 in die Hülle 50 eingeschweißt ist.

Wird das erste Ausführungsbeispiel des Informationsträgers 30 bei dem Sitz gemäß dem vierten Ausführungsbeispiel verwendet, so erstreckt sich die Hülle 50 vorzugsweise über die gesamte Oberseite 40 des Klapptisches 32.

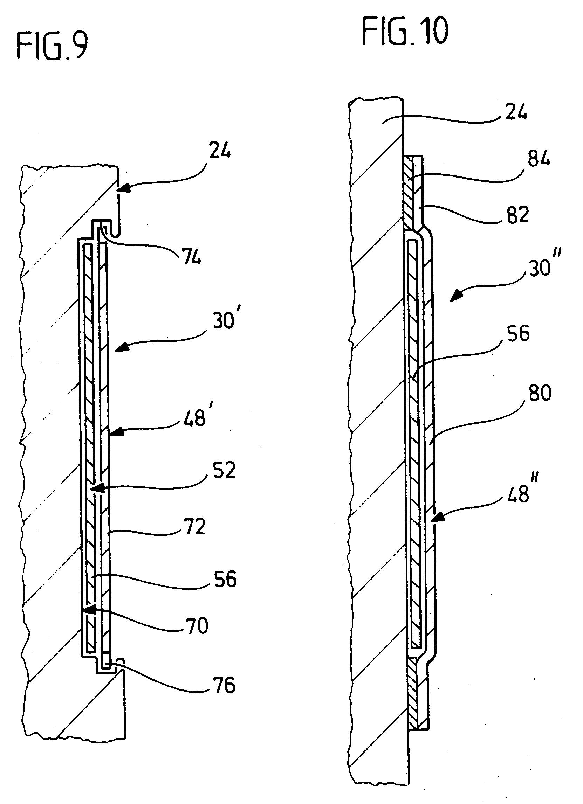

Bei einem zweiten Ausführungsbeispiel eines erfindungsgemäßen Informationsträgers 30', dargestellt in Fig. 9, ist der Informationsträgereinsatz 52 ebenfalls als Einsteckkarte 56 ausgebildet, die Aufnahme 48' ist jedoch nicht durch die Hülle 50 gebildet, sondern einerseits durch eine in die Verkleidung 24, das heißt die jeweilige den Informationsträger 30' tragende Oberfläche derselben eingelassene Vertiefung 70, welche andererseits durch eine durchsichtige Deckplatte 72 verschlossen ist. Die Deckplatte 72 ist vorzugsweise durch in Ausnehmungen 74 eingreifende Vorsprünge formschlüssig an der Verkleidung 24 gehalten, wobei beispielsweise die Ausnehmungen 74 in der Verkleidung 24 und die Vorsprünge 76 an der Deckplatte 72 angeordnet sind, es kann jedoch aber auch umgekehrt sein.

Die Deckplatte 72 übergreift dabei vorzugsweise die Einsteckkarte 56 vollständig, so daß deren Sichtfläche 54 durch die durchsichtige Deckplatte 72 hindurch erkennbar ist.

Dieses zweite Ausführungsbeispiel des Informationsträgers 30' ist beispielsweise bei dem vierten Ausführungsbeispiel des Sitzes vorteilhaft, wenn sich der Informationsträger 30 nur über einen Teilbereich der Oberseite 40 des Klapptisches 32 erstreckt.

Bei einem dritten Ausführungsbeispiel 30'' eines erfindungsgemäßen Informationsträgers, dargestellt in Fig. 10, ist der Informationsträgereinsatz 52 lediglich an die jeweilige Seite der Verkleidung 24 angelegt und wird dadurch fixiert, daß sie von einem durchsichtigen Deckelement 80 übergriffen ist, welches auf allen Seiten der Einsteckkarte 56 über deren Ränder übersteht und mit seinen überstehenden Randbereichen 82 mit der Verkleidung 24, vorzugsweise über eine Klebeschicht 84, verbunden ist, so daß das Deckelement zusammen mit der als Anlage dienenden Seite der Verkleidung 24 die Aufnahme 48'' bildet.

## Patentansprüche

1. Sitz für ein Verkehrsmittel, insbesondere für ein öffentliches Verkehrsmittel, mit einem Sitzkissen (12), mit einer Rückenlehne (16), mit einem Untergestell (20) sowie mit einer rückseitigen Verkleidung (24) der Rückenlehne (16), wobei die rückseitige Verkleidung (24) im Sichtbereich eines sich hinter dieser befindlichen Passagiers mit einem Informationsträger (30) versehen ist, welcher eine Aufnahme (48) mit einer durchsichtigen Abdeckung (58) für eine Sichtfläche (54) eines Informationsträgereinsatzes (52) und einen Informationsträgereinsatz (52) umfaßt und welcher eine an der Verkleidung unverrückbar fixierte und optisch erkennbare Information präsentiert, **dadurch gekennzeichnet**, daß die Aufnahme (48) als den Informationsträgereinsatz (52) umschließende Hülle (50) aus flexiblem Folienmaterial ausgebildet ist, welche eine der Verkleidung (24) abgewandte Hüllenwand (58) und eine der Verkleidung (24) zugewandte Trägerwand (60) aufweist, und daß die Trägerwand (60) der Hülle (50) über eine Klebeschicht (62, 84) mit der Verkleidung (24) verbunden ist.

2. Sitz nach Anspruch 1, dadurch gekennzeichnet, daß die Hülle (50) den Informationsträgereinsatz (52) unentnehmbar einschließt.

3. Sitz für ein Verkehrsmittel, insbesondere für ein öffentliches Verkehrsmittel, mit einem Sitzkissen (12), mit einer Rückenlehne (16) mit einem Untergestell (20) sowie mit einer rückseitigen Verkleidung (24) der Rückenlehne (16), wobei die rückseitige Verkleidung (24) im Sichtbereich eines sich hinter dieser befindlichen Passagiers mit einem Informationsträger (30) versehen ist, welcher eine Aufnahme (48) mit einer durchsichtigen Abdeckung (58) für eine Sichtfläche (54) eines Informationsträgereinsatzes (52) und einen Informationsträgereinsatz (52) umfaßt und welcher eine an der Verkleidung unverrückbar fixierte und optisch erkennbare Information präsentiert, dadurch gekennzeichnet, daß die Aufnahme (48) als den Informationsträgereinsatz (52) umschließende Hülle (50) aus flexiblem Folienmaterial ausgebildet ist, daß die Hülle (50) mit einer der Verkleidung (24) abgewandten Hüllenwand (58) und einer der Verkleidung (24) zugewandten Trägerwand (60) den Informationsträgereinsatz (52) unentnehmbar umschließt und daß die Trägerwand (60) der Hülle (50) mit der Verkleidung (24) verbunden ist.

4. Sitz nach einem der voranstehenden Ansprüche, dadurch gekennzeichnet, daß der Informationsträgereinsatz (52) in die Hülle (50) eingeschweißt ist.

5. Sitz nach einem der voranstehenden Ansprüche, dadurch gekennzeichnet, daß der Informationsträgereinsatz (52) kartenähnlich flach ausgebildet ist.

6. Sitz nach einem der voranstehenden Ansprüche, dadurch gekennzeichnet, daß der Informationsträgereinsatz (52) mit der optischen Information bedruckt ist.

7. Sitz nach Anspruch 1, dadurch gekennzeichnet, daß der Informationsträgereinsatz (52) auswechselbar ist.

8. Sitz nach Anspruch 7, dadurch gekennzeichnet, daß der Informationsträgereinsatz (52) in der Hülle (50) auswechselbar gehalten ist.

9. Sitz nach Anspruch 6, dadurch gekennzeichnet, daß die Hülle (50) eine Einführöffnung (64) für den Informationsträgereinsatz (52) umfaßt.

10. Sitz nach Anspruch 7, dadurch gekennzeichnet, daß der Informationsträgereinsatz (52) in eine schlitzartige Einstecköffnung (64) der Hülle (50) einsteckbar ist.

11. Sitz nach einem der voranstehenden Ansprüche, dadurch gekennzeichnet, daß die Hülle (50) auf einer frei sichtbaren Oberfläche (28) der Verkleidung (24) angeordnet ist.

12. Sitz nach einem der Ansprüche 1 bis 10, dadurch gekennzeichnet, daß die Hülle (50) in einem durch einen von der Verkleidung (24') umfaßten Klapptisch (32) verdeckbaren Bereich (38) der Verkleidung (24) angeordnet ist.

13. Sitz nach einem der Ansprüche 1 bis 10, dadurch gekennzeichnet, daß die Hülle (50) auf einer Unterseite eines von der Verkleidung (24) umfaßten Klapptisches (32) angeordnet ist.

14. Sitz für ein Verkehrsmittel, insbesondere für ein öffentliches Verkehrsmittel, mit einem Sitzkissen (12), mit einer Rückenlehne (16) mit einem Untergestell (20) sowie mit einer rückseitigen Verkleidung (24) der Rückenlehne (16), wobei die rückseitige Verkleidung (24) im Sichtbereich eines sich hinter dieser befindlichen Passagiers mit einem Informationsträger (30) versehen ist, welcher eine Aufnahme (48) mit einer durchsichtigen Abdeckung (58) für eine Sichtfläche (54) eines Informationsträgereinsatzes (52) und einen Informationsträgereinsatz (52) umfaßt und welcher eine an der Verkleidung unverrückbar fixierte und optisch erkennbare Information präsentiert, dadurch gekennzeichnet, daß die Aufnahme (48) als den Informationsträgereinsatz (52) umschließende Hülle (50) aus flexiblem Folienmaterial ausgebildet ist und daß die Hülle (50) in einem durch einen von der Verkleidung (24') umfaßten Klapptisch (32) verdeckbaren Bereich (38) der Verkleidung (24) oder auf einer Unterseite des Klapptisches (32) angeordnet ist.

## Claims

1. Seat for a vehicle, in particular, for a public transport vehicle, with a seat cushion (12), a seat back (16), a supporting frame (20) and a rear-side covering (24) for the seat back (16), said rear-side covering (24) being provided with an information carrier (30) in the field of vision of a passenger located behind said covering, said information carrier comprising a receiving means (48) with a transparent cover (58) for a visible surface (54) of an information carrier insert (52), and an information carrier insert (52), and said information carrier presenting optically recognizable information immovably fixed on said covering, characterized in that the receiving means (48) is in the form of a sheath (50) made of flexible film material surrounding the information carrier insert (52), said sheath comprising a sheath wall (58) facing away from the covering (24) and a supporting wall (60) facing the covering (24), and in that the supporting wall (60) of the sheath (50) is connected to the covering (24) by an adhesive layer (62, 84).

2. Seat as defined in claim 1, characterized in that the sheath (50) encloses the information carrier insert (52) in a non-removable manner.

3. Seat for a vehicle, in particular, for a public transport vehicle, with a seat cushion (12), a seat back (16), a supporting frame (20) and a rear-side covering (24) for the seat back (16), said rear-side covering (24) being provided with an information carrier (30) in the field of vision of a passenger located behind said covering, said information carrier comprising a receiving means (48) with a transparent cover (58) for a visible surface (54) of the information carrier insert (52), and an information carrier insert (52), and said information carrier presenting optically recognizable information immovably fixed on said covering, characterized in that the receiving means (48) is in the form of a sheath (50) made of flexible film material surrounding the information carrier insert (52), in that the sheath (50) encloses the information carrier insert (52) in a non-removable manner with a sheath wall (58) facing away from the covering (24) and a supporting wall (60) facing the covering (24), and in that the supporting wall (60) of the sheath (50) is connected to the covering (24).

4. Seat as defined in any one of the preceding claims, characterized in that the information carrier insert (52) is welded into the sheath (50).

5. Seat as defined in any one of the preceding claims, characterized in that the information carrier insert (52) is of flat, card-like design.

6. Seat as defined in any one of the preceding claims, characterized in that the information carrier insert (52) is printed with the optical information.

7. Seat as defined in claim 1, characterized in that the information carrier insert (52) is exchangeable.

8. Seat as defined in claim 7, characterized in that the information carrier insert (52) is held in the sheath (50) in an exchangeable manner.

9. Seat as defined in claim 6, characterized in that the sheath (50) comprises an insertion opening (64) for the information carrier insert (52).

10. Seat as defined in claim 7, characterized in that the information carrier insert (52) is insertable into a slit-like insertion opening (64) of the sheath (50).

11. Seat as defined in any one of the preceding claims, characterized in that the sheath (50) is arranged on a freely visible surface (28) of the covering (24).

12. Seat as defined in any one of claims 1 to 10, characterized in that the sheath (50) is arranged in a region (38) of the covering (24) adapted to be concealed by a pulldown table (32) comprised by the covering (24').

13. Seat as defined in any one of claims 1 to 10, characterized in that the sheath (50) is arranged on an underside of a pulldown table (32) comprised by the covering (24).

14. Seat for a vehicle, in particular, for a public transport vehicle, with a seat cushion (12), a seat back (16), a supporting frame (20) and a rear-side covering (24) for the seat back (16), said rear-side covering (24) being provided with an information carrier (30) in the field of vision of a passenger located behind said covering, said information carrier comprising a receiving means (48) with a transparent cover (58) for a visible surface (54) of an information carrier insert (52), and an information carrier insert (52), and said information carrier presenting optically recognizable information immovably fixed on said covering, characterized in that the receiving means (48) is in the form of a sheath (50) made of flexible film material surrounding the information carrier insert (52), and in that the sheath (50) is arranged in a region (38) of the covering (24) adapted to be concealed by a pulldown table (32) comprised by the covering (24'), or on an underside of the pulldown table (32).

## Revendications

1. Siège pour moyen de transport, en particulier pour moyen de transport public, comprenant un coussin pour s'asseoir (12), un dossier (16), un piètement (20) ainsi qu'un revêtement (24) sur l'arrière du dossier (16), le revêtement (24) sur l'arrière du dossier étant pourvu dans le champ de vision d'un passager se trouvant derriere celui-ci d'un support d'information (30), lequel englobe un logement (48) comprenant une couverture transparente (58) pour une surface visible (54) d'un insert porteur d'information (52) et un insert porteur d'information (52) et lequel présente une information fixée de manière inamovible sur le revêtement et optiquement reconnaissable, caractérisé en ce que le logement (48) en tant que gaine (50) enveloppant l'insert porteur d'information (52) est fait d'une feuille flexible, laquelle présente inne paroi de gaine (58) opposée au revêtement (24) et une paroi porteuse (60) faisant face au revêtement, et en ce que la paroi porteuse (60) de la gaine (50) est reliée au revêtement (24) par une couche adhésive (62, 84).

2. Siège selon la revendication 1, caractérisé en ce que la gaine (50) enferme de manière inextractible l'insert porteur d'information (52).

3. Siège pour moyen de transport, en particulier pour moyen de transport public, comprenant un coussin pour s'asseoir (12), un dossier (16), un piètement (20) ainsi qin'un revêtement (24) sur l'arrière du dossier (16), le revêtement (24) sur l'arrière du dossier étant pourvu dans le champ de vision d'un passager se trouvant derrière celui-ci d'un support d'information (30), lequel englobe un logement (48) comprenant une couverture transparente (58) pour une surface visible (54) d 'un insert porteur d'information (52) et un insert porteur d'information (52) et lequel présente une information fixée de manière inamovible sur le revêtement et optiquement reconnaissable, caractérisé en ce que le logement (48) en tant que gaine (50) enveloppant l'insert porteur d'information (52) est fait d'une feuille flexible, en ce que la gaine (50) comprenant une paroi de gaine (58) opposée au revêtement (24) et une paroi porteuse (60) faisant face au revêtement (24) enferme de manière inextractible l'insert porteur d'information (52) et en ce que la paroi porteuse (60) de la gaine (50) est reliée au revêtement (24).

4. Siège selon une des revendications précédentes, caractérisé en ce que l'insert porteur d'information (52) est soudé dans la gaine (50).

5. Siège selon une des revendications précédentes, caractérisé en ce que l'insert porteur d'information (52) est de forme plate comme une carte.

6. Siège selon inne des revendications précédentes, caractérisé en ce que l'insert porteur d'information (52) est imprimé avec l'information optique.

7. Siège selon la revendication 1, caractérisé en ce que l'insert porteur d'information (52) peut être remplacé.

8. Siège selon la revendication 7, caractérisé en ce que l'insert porteur d'information (52) est maintenu dans la gaine (50) de manière remplaçable.

9. Siège selon la revendication 6, caractérisé en ce que la gaine (50) englobe un orifice d'entrée (64) pour l'insert porteur d'information (52).

10. Siège selon la revendication 7, caractérisé en ce que l'insert porteur d'information (52) peut être inséré dans un orifice d'insertion (64) en forme de fente de la gaine (50).

11. Siège selon une des revendications précédentes, caractérisé en ce que la gaine (50) est disposée sur une surface (28) librement visible du revêtement (24).

12. Siège selon une des revendications 1 à 10, caractérisé en ce que la gaine (50) est disposée dans une zone (38) du revêtement (24) qui peut être recouverte par une table rabattable (32) englobée dans le revêtement (24').

13. Siège selon inne des revendications 1 à 10, caractérisé en ce que la gaine (50) est disposée sur un côté inférieur d'une table rabattable (32) englobée dans le revêtement (24).

14. Siège pour moyen de transport, en particulier pour moyen de transport public, comprenant un coussin pour s'asseoir (12), un dossier (16), un piètement (20) ainsi qu'un revêtement (24) sur l'arrière du dossier (16), le revêtement (24) sur l'arrière du dossier étant pourvu dans le champ de vision d'un passager se trouvant derrière celui-ci d'un support d'information (30), lequel englobe un logement (48) comprenant une couverture transparente (58) pour une surface visible (54) d'un insert porteur d'information (52) et un insert porteur d'information (52) et lequel présente une information fixée de manière inamovible sur le revêtement et optiquement reconnaissable, caractérisé en ce que le logement (48) en tant que gaine (50) enveloppant l'insert porteur d'information (52) est fait d'une feuille flexible et en ce que la gaine (50) est disposée dans une zone (38) du revêtement (24) qui peut être recouverte par une table rabattable (32) englobée dans le revêtement (24') ou sur un côté inférieur de la table rabattable (32).
